(19) Europäisches Patentamt

European Patent Office

Office européen des brevets

(11) EP 0 729 778 B1

(12) EUROPÄISCHE PATENTSCHRIFT

(45) Veröffentlichungstag und Bekanntmachung des Hinweises auf die Patenterteilung:
**17.10.2001 Patentblatt 2001/42**

(51) Int Cl.$^7$: **B01D 53/86**, C01B 17/04

(21) Anmeldenummer: **96102239.9**

(22) Anmeldetag: **15.02.1996**

(54) **Verfahren zum Entschwefeln eines H2S enthaltenden Gases**

Process for desulphurisation of a H2S containing gas

Procédé pour la désulphuration d'un gaz contenant de l'H2S

(84) Benannte Vertragsstaaten:
**DE ES FR**

(30) Priorität: **03.03.1995 DE 19507440**

(43) Veröffentlichungstag der Anmeldung:
**04.09.1996 Patentblatt 1996/36**

(73) Patentinhaber: **mg technologies ag**
**60325 Frankfurt am Main (DE)**

(72) Erfinder:
• **Stetzer, Klaus**
**D-63303 Dreieich (DE)**

• **Willing, Wolfgang, Dr.**
**D-61206 Wöllstadt (DE)**

(74) Vertreter: **Revesz, Veronika**
**c/o Lurgi AG**
**Abt. Patente, A-VRP**
**Lurgiallee 5**
**60295 Frankfurt/Main (DE)**

(56) Entgegenhaltungen:
**EP-A- 0 332 373      EP-A- 0 506 160**
**WO-A-92/02449**

**Beschreibung**

Die Erfindung betrifft ein verfahren zum Entschwefeln eines $H_2S$ enthaltenden Gases, das auch $SO_2$ und/ oder $O_2$ enthält, wobei man das Gas durch mindestens ein Bett eines metalloxidreichen Katalysators und anschließend durch ein Endreinigungsbett leitet, wobei sich auf dem metalloxidreichen Katalysator, der zu mindestens 60 Gew. -% aus $Al_2O_3$ oder $TiO_2$ besteht, und im Endreinigungsbett Elementarschwefel abscheidet, der durch eine in Zeitabständen durchgeführte Regenerierbehandlung entfernt wird, und wobei das Endreinigungsbett aus körnigem Adsorbens besteht, welches vom metalloxidreichen Katalysator verschieden ist.

Ein solches Verfahren ist aus EP-A-0506160 bekannt. Hierbei wird auch noch im Endreinigungsbett $H_2S$ mit $O_2$ katalytisch zu Elementarschwefel umgesetzt. Der erzielbare Restgehalt an Schwefelverbindungen im gereinigten Gas wird hier durch das thermodynamische Gleichgewicht unter den herrschenden Betriebsbedingungen bestimmt. Hinzu kommt die Fähigkeit des Katalysators im Endreinigungsbett, Elementarschwefel zu binden. Durch die zunehmende Schwefelbehandlung des Katalysators wird aber dessen katalytische Aktivität und auch seine Fähigkeit beeinträchtigt, weiteren Elementarschwefel zu adsorbieren. Beim bekannten Verfahren enthält deshalb das gereinigte Gas eine störende Restbeladung an dampfförmigem und/oder aerosolförmigem Schwefel. Deshalb muß die Regenerierbehandlung in relativ kurzen Zeitabständen durchgeführt werden.

Der Erfindung liegt die Aufgabe zugrunde, beim eingangs genannten Verfahren für einen sehr niedrigen Restgehalt an Schwefel im gereinigten Gas zu sorgen und gleichzeitig das Bett der katalytischen Umsetzung auch noch mit hoher Beladung an Schwefel betreiben zu können. Insgesamt soll dadurch das Verfahren kostengünstiger durchgeführt werden. Erfindungsgemäß geschieht dies durch die Verfahrensmaßnahmen, die im Kennzeichen des Patentanspruchs 1 genannt sind.

Wenn das Filterbett zu 60 bis 100 Gew. -% aus körniger Aktivkohle besteht, empfiehlt es sich, eine Aktivkohle mit einer spezifischen Oberfläche nach BET von vorzugsweise 1000 bis 1500 $m^2$/g zu verwenden. Eine solche Aktivkohle hat üblicherweise ein Schüttgewicht von 200 bis 800 kg/$m^3$ und vorzugsweise 300 bis 500 kg/$m^3$, die Korngrößen liegen üblicherweise im Bereich von 1 bis 8 mm. Wird das Filterbett ganz oder überwiegend aus Aktivkoks gebildet, so empfehlen sich Korngrößen im Bereich von 0,5 bis 5 mm, spezifische Oberflächen (nach BET) con 200 bis 500 $m^2$/ g und Schüttdichten von 200 bis 800 kg/$m^3$. Das Adsorbens kann auch mit einer Imprägnierung versehen sein. Eine solche Imprägnierung kann z.B. die hydrophoben Eigenschaften des Adsorbens verbessern. Für Zeolithe erreicht man die Hydrophobie in bekannter Weise durch Dealuminieren.

Bei dem metalloxidreichen Katalysator des Verfahrens handelt es sich bevorzugt um an sich bekannte Katalysatoren auf der Basis von $Al2O3$ oder $TiO2$ (vgl. US-Patent 5 256 384). Diese Katalysatoren können daneben noch mit etwa 0,5 bis 5 Gew.- % Eisen, Kobalt oder Nickel imprägniert sein, wie das auch im US-Patent 5 256 384 beschrieben ist. Die katalytische Umsetzung des $H2S$ in Gegenwart dieser metalloxidreichen Katalysatoren wird üblicherweise bei Temperaturen von 100 bis 180°C durchgeführt, wobei man $H2S$ mit $SO2$ und/oder $02$ weitgehend zu Elementarschwefel umwandelt.

Zum Regenerieren wird der mit Elementarschwefel beladene metalloxidreiche Katalysator in bekannter Weise bei Temperaturen von 200 bis 400°C mit einem Regenerierfluid, z.B. Wasserdampf, Wasserstoff, Methan oder auch $H2S$-haltigem Gas, behandelt. Auf prinzipiell die gleiche Weise kann das beladene Filterbett regeneriert werden. Einzelheiten der Regenerierbehandlung sind im US-Patent 5 256 384 beschrieben.

Zweckmäßigerweise werden der Katalysator und das Filterbett gemeinsam regeneriert.

Durch das erfindungsgemäße Verfahren wird der wichtige Vorteil erreicht, dass man das Bett metalloxidreichen Katalysators ziemlich hoch mit Elementarschwefel beladen kann, bevor es regeneriert werden muß. Die Beladung des Katalysators mit Elementarschwefel beträgt vorzugsweise 40 bis 80 Gew.- %, bezogen auf den beladungsfreien Katalysator, bevor man regeneriert.

Das Gas, welches man dem Filterbett zuführt, enthält pro $Nm^3$ noch mindestens 350 mg Elementarschwefel. Dieser Schwefel wird im Filterbett zu mindestens 80% adsorbiert, so dass ein praktisch schwefelfreies Gas das Filterbett verlässt. Das Filterbett hat eine Betthöhe von 10 bis 80 cm. Beim Material für das Filterbett kommt es auf dessen Fähigkeit an, Elementarschwefel zu binden. Aktivkohle oder auch Aktivkoks sind hierfür gut geeignet, auch deshalb, weil die Kosten für diese Materialien relativ niedrig sind. Gleichzeitig können sie ohne Schwierigkeiten regeneriert werden.

Das Material des Filterbettes braucht keine katalytische Aktivität für die Umsetzung von $H_2S$ zu Elementarschwefel zu besitzen, man kann deshalb dem Filterbett ein praktisch $O_2$-freies Gas zuführen, der restliche $O_2$-Gehalt des dem Filterbett zugeführten Gases liegt bei höchstens 5 mg/$Nm^3$.

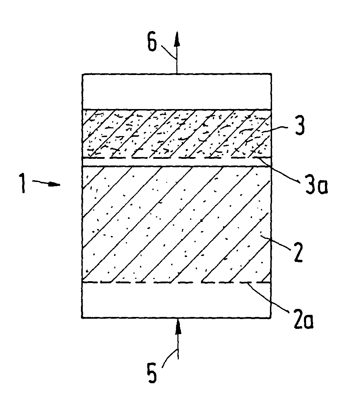

Ausgestaltungsmöglichkeiten des Verfahrens werden mit Hilfe der Zeichnung erläutert.

In einem Reaktor (1) sind ein Katalysatorbett (2) und ein Filterbett (3) jeweils auf Siebboden (2a) bzw. (3a) angeordnet. Das zu behandelnde Gas, welches $H_2S$ und daneben noch $SO_2$ und/oder $O_2$ enthält, wird durch die Leitung (5) herangeführt und strömt zunächst durch das Bett (2). Dieses Bett wird durch einen körnigen metalloxidreichen Katalysator z.B. auf der Basis von $Al_2O_3$ oder $TiO_2$ gebildet. Nach den Reaktionsgleichungen

$$2 H_2S + SO_2 \rightarrow 3 S + 2 H_2O$$

und

$$2 H_2S + O_2 \rightarrow 2 S + H_2O$$

wird bei Temperaturen von üblicherweise 100 bis 180°C Elementarschwefel gebildet und teilweise auf dem Katalysator adsorbiert. Das von $H_2S$ weitgehend befreite Gas, welches aber dampfförmigen und/oder aerosolförmigen Elementarschwefel mit sich trägt, wird zur weiteren Reinigung durch das Filterbett (3) geführt. Hier wird der größte Teil dieses Schwefels adsorptiv gebunden. Für das Filterbett (3) empfehlen sich Temperaturen im Bereich von 20 bis 180°C, und üblicherweise werden die Temperaturen im Bereich von 50 bis 150°C liegen. Gereinigtes Gas verläßt den Reaktor (1) durch die Leitung (6), sein Gehalt an Elementarschwefel beträgt üblicherweise höchstens 150 mg/Nm$^3$.

Die Regenerierung des Katalysatorbettes (2) und des Filterbettes (3) kann zweckmäßigerweise gemeinsam erfolgen. Zu diesem Zweck leitet man ein heißes Regenerierfluid, z.B. Wasserdampf oder Restgas ("tailgas") aus einer Claus-Anlage, mit Temperaturen von 200 bis 400°C nacheinander durch die beiden Betten (2, 3) und vorzugsweise im Gegenstrom zur Beladerichtung.

Beispiel

Das Restgas ("tailgas") aus einer Claus-Anlage fällt in einer Menge von 20500 Nm$^3$/h mit einer Temperatur von 125°C und einem Druck von 1,26 bar an, sein Gehalt an Elementarschwefel (S), $H_2S$ und $SO_2$ ist in Tabelle 1 in Spalte A angegeben:

Tabelle 1

|  | A | B | C |
|---|---|---|---|
| $H_2S$ (ppm) | 2880 | 539 | 552 |
| $SO_2$ (ppm) | 1440 | 270 | 233 |
| S (mg/Nm$^3$) | 971 | 350 | 65 |

Das Restgas durchströmt in Aufwärtsrichtung ein 1,5 m hohes Bett aus körnigem $Al_2O_3$-Katalysator, der mit 1 Gew.-% Ni imprägniert ist. Am Austritt des Katalysatorbettes weist das Gas noch die Schwefelkomponenten der Spalte B, Tabelle 1, auf, sofern der Katalysator frisch regeneriert war. Dieses Gas wird aufwärts durch eine Filterschicht von 30 cm Höhe, die auf einem Drahtgewebe angeordnet ist und aus Aktivkohle besteht, geleitet. Die Aktivkohle hat ein Schüttgewicht von 385 g/l und eine BET-Oberfläche von 1200 m$^2$/g. Das die Filterschicht verlassende Gas enthält die in Tabelle 1, Spalte C, angegebenen Schwefelkomponenten.

Bei längerer Betriebsdauer und wachsender Beladung des Katalysatorbettes mit Elementarschwefel wächst auch der Gehalt an Elementarschwefel sowohl im Gas, das aus dem Katalysatorbett kommt - vgl. Tabelle 2, Zeile B - und im Gas, das aus der Filterschicht kommt, vgl. Tabelle 2, Zeile C.

Tabelle 2

| Betriebsdauer (h) | 0 | 5 | 10 | 15 | 20 | 25 | 30 |
|---|---|---|---|---|---|---|---|
| B: S-Gehalt (mg/Nm$^3$) | 350 | 443 | 545 | 678 | 899 | 958 | 965 |
| C: S-Gehalt (mg/Nm$^3$) | 65 | 68 | 70 | 72 | 73 | 75 | 79 |

Die Regeneration des beladenen Katalysatorbettes, das pro kg Katalysator 0,32 kg Elementarschwefel enthält, erfolgt nach 55 Betriebsstunden. Gleichzeitig wird das Filterbett, beladen mit 0,48 kg Elementarschwefel pro kg Aktivkohle, regeneriert. Die Regenerierung der beiden Betten erfolgt gemeinsam in einem Arbeitsgang, wobei man ungereinigtes Restgas von 300°C abwärts durch die Betten leitet und das Gas anschließend zum Kondensieren des aufgenommenen Schwefels kühlt. Die Regeneration wird beendet, wenn die Betten die Temperatur von 300°C erreicht haben. Durch die Regeneration mit anschließender Kühlung wird die Aktivität des Katalysators und auch die Adsorptionsfähigkeit des Filterbettes wieder hergestellt.

**Patentansprüche**

1. Verfahren zum Entschwefeln eines $H_2S$ enthaltenden Gases, das auch $SO_2$ und/oder $O_2$ enthält, wobei man das Gas durch mindestens ein Bett eines metalloxidreichen Katalysators und anschließend durch ein Endreinigungsbett leitet, wobei sich auf dem Katalysator, der zu mindestens 60 Gew.-% aus $Al_2O_3$ oder $TiO_2$ besteht, und im Endreinigungsbett Elementarschwefel abscheidet, der durch eine in Zeitabständen durchgeführte Regenerierbehandlung entfernt wird, und wobei das Endreinigungsbett aus körnigem Adsorbens besteht, welches vom metalloxidreichen Katalysator verschieden ist, **dadurch gekennzeichnet, daß** das Endreinigungsbett als Filterbett für die Adsorption von Elementarschwefel ausgebildet ist und eine Höhe von 10 bis 80 cm aufweist, daß man dem Filterbett ein vom metalloxidreichen Katalysator kommendes Gas mit Temperaturen im Bereich von 20 bis 180°C zuführt, daß das in das Filterbett eintretende Gas pro $Nm^3$ mindestens 350 mg Elementarschwefel und höchstens 5 mg $O_2$ enthält, daß im Filterbett mindestens 80 % des eingeleiteten Elementarschwefels adsorbiert werden, daß das Filterbett aus mindestens einem der Materialien

   a) Aktivkohle mit spezifischer Oberfläche nach BET von 500 bis 2500 $m^2$/g,
   b) Aktivkoks mit spezifischer Oberfläche nach BET vom 200 bis 500 $m^2$/g, oder
   c) Zeolith

   besteht, und daß man das Bett des metalloxidreichen Katalysators mit Elementarschwefel bis auf mindestens 40 Gew.-%, bezogen auf den beladungsfreien Katalysator, belädt, bevor man die Beladung durch die Regenerierbehandlung entfernt.

2. Verfahren nach Anspruch 1, **dadurch gekennzeichnet, daß** man das Filterbett und das Katalysatorbett gemeinsam regeneriert, indem man ein heißes Regenerierfluid durch beide Betten leitet.

**Claims**

1. A process for desulfurizing a $H_2S$-containing gas which also contains $SO_2$ and/or $O_2$, wherein the gas is passed through at least one bed of a catalyst rich in metal oxide and subsequently through a final cleaning bed, wherein on the catalyst, which for at least 60 wt-% consists of $Al_2O_3$ or $TiO_2$, and in the final cleaning bed elementary sulfur is deposited, which is removed by a regenerating treatment performed in intervals, and wherein the final cleaning bed consists of granular adsorbent which is different from the catalyst rich in metal oxide, **characterized in that** the final cleaning bed constitutes a filter bed for the adsorption of elementary sulfur and has a height of 10 to 80 cm, that a gas coming from the catalyst rich in metal oxide is supplied to the filter bed with temperatures in the range from 20 to 180°C, that the gas entering the filter bed contains at least 350 mg/$Nm^3$ elementary sulfur and not more than 5 mg/$Nm^3$ $O_2$, that at least 80 % of the elementary sulfur introduced are adsorbed in the filter bed, that the filter bed consists of at least one of the materials

   a) activated carbon with a specific BET surface of 500 to 2500 $m^2$/g,
   b) activated coke with a specific BET surface of 200 to 500 $m^2$/g, or
   c) zeolite,

   and that the bed of the catalyst rich in metal oxide is loaded with elementary sulfur up to at least 40 wt-%, based on the load-free catalyst, before the load is removed by the regenerating treatment.

2. The process as claimed in claim 1, **characterized in that** the filter bed and the catalyst bed are regenerated together, **in that** a hot regenerating fluid is passed through both beds.

**Revendications**

1. Procédé de désulfuration d'un gaz contenant de l'$H_2S$, qui renferme également du $SO_2$ et/ou de l'$O_2$, en envoyant le gaz dans au moins un lit d'un catalyseur riche en oxyde métallique et ensuite dans un lit final d'épuration, le soufre élémentaire qui est éliminé par un traitement de régénération effectué à certains intervalles de temps se déposant sur le catalyseur qui est constitué pour au moins 60 % en poids d'$Al_2O_3$ ou de $TiO_2$ et dans le lit final d'épuration et le lit final d'épuration étant constitué d'un adsorbant en grains qui est différent du catalyseur riche en oxyde métallique, **caractérisé en ce que** le lit final d'épuration est constitué sous la forme d'un lit filtrant pour l'adsorption du soufre élémentaire et à une hauteur de 10 à 80 cm **en ce qu'**au lit filtrant est envoyé un gaz venant du catalyseur riche en oxyde métallique et ayant des températures de l'ordre de 20 à 180°C **en ce que** le gaz qui entre dans le lit filtrant contient par m$^3$, pris dans les conditions normales de température de pression, au moins 350 mg de soufre élémentaire et au plus 5 mg d'$O_2$ **en ce qu'**il est adsorbé dans le lit filtrant au moins 80 % du soufre élémentaire qui y est introduit **en ce que** le lit filtrant est constitué d'au moins l'un des matériaux

    a) charbon actif ayant une surface spécifique suivant BET de 500 à 2500 m$^2$/g,
    b) coke actif ayant une surface spécifique suivant BET de 200 à 500 m$^2$/g, ou
    c) zéolite

et **en ce que** l'on charge le lit du catalyseur riche en oxyde métallique de soufre élémentaire jusqu'à au moins 40 % en poids rapporté au catalyseur exempt de charge avant d'éliminer la charge par le traitement de régénération.

2. Procédé suivant la revendication 1, **caractérisé en ce que** l'on régénère le lit filtrant et le lit de catalyseur en commun en envoyant un fluide chaud de régénération dans les deux lits.